# EUROPÄISCHE PATENTSCHRIFT

(11) **EP 0 552 616 B1**
(45) Veröffentlichungstag und Bekanntmachung des Hinweises auf die Patenterteilung: **25.10.1995**
(21) Anmeldenummer: 93100209.1
(22) Anmeldetag: 08.01.1993
(51) Int. Cl.: B23K 26/04

(54) **Verfahren und Vorrichtung zum Bearbeiten von Werkstücken mittels der von einem Laser emittierten Laserstrahlung**
Procedure and device for the treatment of work pieces by laser radiation emitted by a laser
Procédé et dispositif pour traiter des pièces d'oeuvre par rayonnement du laser émis d'un laser

(30) Priorität: 13.01.1992 DE 4200632
(43) Veröffentlichungstag der Anmeldung: 28.07.1993
(73) Patentinhaber: LCTec Laser- und Computertechnik GmbH, D-87459 Pfronten (DE)
(72) Erfinder: Kuhl, Michael, W-8958 Füssen (DE); Zwick, Alfred, W-8951 Görisried (DE); Eberl, Günter, Dr., W-8961 Betzigau (DE)
(74) Vertreter: Beetz & Partner Patentanwälte

(56) Entgegenhaltungen:
- EP-A- 0 187 934
- EP-A- 0 339 402
- EP-A- 0 348 531
- EP-A- 0 391 539
- DE-A- 3 424 825
- DE-C- 3 926 859
- US-A- 4 121 087
- 'BROCKHAUS ENZYKLOPADIE' 1972 , F. A. BROCKHAUS , WIESBADEN, DE 17. Auflage, Band 15
- PATENT ABSTRACTS OF JAPAN vol. 9, no. 84 (M-371)(1807) 13. April 1985 & JP-A-59 212 184 (HITACHI SEISAKUSHO K.K) 1 Dezember 1984
- SPRECHSAAL Bd. 123, Nr. 2, Februar 1990, COBURG Seiten 151 - 154 , XP126206 'Das MAHO LASERCAVING- ungeahnte Dimensionen im Formenbau'

## Beschreibung

Die Erfindung betrifft ein Verfahren gemäß Oberbegriff der Ansprüche 1, 13 und eine Vorrichtung gemäß Oberbegriff des Anspruchs 14.

Laserstrahlung, mit einer Meßeinrichtung, einer Laseranregungseinheit und einer elektronischen Steuereinheit.

In der DE 34 24 825 A1 ist ein Verfahren beschrieben, bei dem die Laserintensität zwischen definierten Grenzwerten gehalten wird. Mit einem Strahlungssensor wird zum Beispiel die Intensität der Plasmaleuchtdichte fortlaufend erfaßt und die Laserintensität durch eine entsprechende Modulation der Laserstrahlung zur Aufrechterhaltung einer Plasmabildung unter Vermeidung einer unerwünschten Detonationswelle geregelt. Das Regelprinzip dieses Verfahrens basiert auf dem eines Zweipunktreglers, mit den bekannten Nachteilen, wie der Abhängigkeit der Grenzfrequenz des Reglers von der Zeitkonstante der Regelstrecke. Für ein feines Einstellen der Laserintensität zur Erzielung eines Feinabtrags von Werkstoff ist dieses Verfahren daher nicht geeignet.

In der DE 39 26 859 C2 sind ein Verfahren und eine Vorrichtung zum Schneiden oder Einlochen insbesondere metallischer Werkstücke mit Laserstrahlung beschrieben. Hierbei wird die Bearbeitungsstelle des Werkstücks mit einem Strahlungssensor überwacht, der die herrschende Werkstücktemperatur durch Erfassen der Wärmestrahlung mißt. Es ist ein Zweipunktregler beschrieben, der bei Erreichen einer oberen Werkstücktemperatur die Laserstrahlung abschaltet und bei Erreichen einer unteren Werkstücktemperatur die Laserstrahlung wieder einschaltet. Der Laser wird daher durch das Erreichen der oberen und der unteren Werkstücktemperatur gepulst.

Es ist bekannt, daß Laser eine gewisse Zeit von deren Anregung bis zur Emittierung von Laserstrahlung benötigen. Dies gilt für Festkörperlaser (z.B. einem Nd:YAG-Laser) ebenso wie für Gaslaser (z.B. einen CO₂-Laser). Bei Festkörperlasern ist die Verzögerungszeit noch um ca. eine Zehnerpotenz höher. Weiterhin pumpt der Laser nach dem Ausschalten noch Laserstrahlung nach. Durch diese spezifischen Zeitkonstanten des Lasers, die sich zudem mit der Pulsfrequenz des Lasers ändern, wird die Grenzfrequenz des Zweipunktreglers gemäß der DE 39 26 859 C2 bestimmt. Die Grenzfrequenz der Laserpulse kann daher nicht über einen bestimmten Wert gehoben werden, da sich sonst die Laserpulse überschneiden und dadurch das minimale Energieniveau der Bearbeitung angehoben würde. Durch die laserspezifischen Zeitkonstanten bei Anwendung eines Zweipunktreglers für die Regelung von Laserstrahlung muß daher mit einer niedrigen Grenzfrequenz gefahren werden, was zu relativ großen Leistungspulsen führt. Dadurch kann ein bestimmter Grenzabtrag an Material bei der Vorschubbewegung des Lasers über das Material in einer Schicht nicht unterschritten werden.

Bei Auftreffen der Laserstrahlung auf das Material kommt es zu einer Temperaturerhöhung innerhalb einer sehr kurzen, im Nanosekunden-Bereich liegenden Zeitspanne. Die Steuergröße einer Laserregelung, z.B. die Strahlungsleistung, muß zumindest gleich schnell reagieren. Ist dies nicht der Fall, so wird ein solches Regelsystem instabil.

Die Dynamik des Lasers, d.h. die systembedingte Ansprechzeit und das Nachpumpen der Laserstrahlung nach dem Ausschalten, ist bei einer Zweipunktregelung gemäß der DE 39 26 859 C2, welche die Strahlung eines Pulses erfaßt und denselben Puls mit dem erfaßten Signal regelt, in der Regelstrecke wirksam, was zu nicht genau reproduzierbaren Laserpulsen führt. Für einen Feinabtrag von Material ist daher eine Regelung, die die Zeitkonstanten des Lasers in der Regelstrecke enthält, nicht geeignet.

Weiterhin ist die Eigendynamik von Lasern nur bei Pulsfrequenzen annähernd konstant, deren Änderungen innerhalb bestimmter, sehr enger Grenzen liegen. Wird nun ein sich selbst pulsender Laser verwendet, so ändert sich ständig die Frequenz der Laserpulse. Damit variieren die Ansprechzeiten der Laserstrahlung auf Anregungspulse, wodurch ein genaues Abtragen mit sehr geringen Abtragstiefen, z.B. 1 µm, unmöglich werden.

Aufgabe der Erfindung ist es, ein Verfahren und eine Vorrichtung zum Bearbeiten von Werkstücken mittels der von einem Laser emittierten Laserstrahlung zu realisieren, die einen vergrößerten Materialabtrag ebenso wie einen reproduzierbaren Feinabtrag von Material bei einer hohen Oberflächengüte ermöglichen.

Diese Aufgabe wird erfindungsgemäß durch ein Verfahren gemäß dem Anspruch 1 gelöst.

Durch die nach dem erfindungsgemäßen Verfahren erzeugten Steuerpulse kann die Anregung des Lasers im wesentlichen ohne eine Beeinflussung durch Zeitkonstanten geändert werden. Eine Zeitkonstante ist hierbei z.B. die Zeitdauer zwischen der ansteigenden Flanke eines an die Laseranregungseinheit ausgegebenen Steuerpulses und dem Einsetzen des Laserpulses und damit der Laserstrahlung. Dadurch wird eine hohe zeitliche Reproduzierbarkeit der Laserpulse erreicht, wodurch die jeweilige Stellgröße sehr genau gesteuert werden kann. In vorteilhafter Weise können dadurch sehr feine Materialschichten reproduzierbar und mit konstanter Dicke abgetragen werden.

Eine vorteilhafte Ausgestaltung der Erfindung ist dadurch gekennzeichnet, daß zusätzlich zur Ermittlung des Ist-Abstandes und der Bestimmung der Soll-/Istwertabweichung eine Bearbeitungstiefe ermittelt wird, die dem Abstand zwischen der Oberfläche der Wechselwirkungszone und einer Bodenlinie entspricht, eine Bearbeitungstiefenabweichung aus der Bearbeitungstiefe und der Soll-/Istwertabweichung ermittelt wird und zumindest eine Stellgröße entsprechend der Bearbeitungstiefenabweichung ermittelt wird.

Durch die Kombination der Erfassung des Abstandes von einem Bezugspunkt zu der Oberfläche der Bearbeitungsstelle und der Tiefe der Bearbeitungsstelle (Wechselwirkungszone) kann die reale Bearbeitungstiefe für jede Abtragsschicht am Material während des Abtrags der Schicht bestimmt werden. Dadurch enthält die Regelgröße einen realen Prozeßparameter, der die umgewandelte, aufgeschmolzene und verbrannte Werkstoffmenge an der Bearbeitungsstelle berücksichtigt.

Obige Regelverfahren können sowohl für CO₂-Laser als auch für Nd:YAG-Laser (CW-Laser) angewandt werden. Weiterhin kann die Regelung die Regelabweichung derart verarbeiten, daß nur dann Laserpulse generiert werden, wenn die Solltiefe noch nicht erreicht ist.

In einer weiteren vorteilhaften Ausgestaltung der Erfindung kann als Stellgröße die Strahlungsleistung des Lasers über die Steuereinheit eingestellt werden. Dazu können an die Laseranregungseinheit amplituden-, pulsweiten- und/oder frequenzmodulierte Steuerpulse ausgegeben werden. Weiterhin kann als Stellgröße die Relativgeschwindigkeit zwischen dem Werkstück und dem Laserstrahl über die Ausgabe von geschwindigkeitsmodulierten Steuerpulsen an z.B. eine Vorschubeinheit variiert werden.

Bei einer weiteren vorteilhaften Ausgestaltung der Erfindung kann die relative Vorschubgeschwindigkeit des Laserstrahls erfaßt werden und die Laserleistung entsprechend dem erfaßten Meßwert zusätzlich gesteuert werden. Die entsprechende Laserleistung kann aus z. B. zwei 2-dimensionalen Matrizen ausgelesen werden, wobei eine Matrix eine erfaßte Bearbeitungstiefenabweichung und/oder Soll-/Istwertabweichung des Abstandsmeßwertes in einer Dimension und die Strahlungsleistung in der anderen Dimension enthält. Die andere Matrix enthält z. B. die relative Vorschubgeschwindigkeit und die Laserleistung. Die Laserleistung kann z. B. durch einen amplitudenmodulierten Steuerpuls geändert werden. Diese beiden Matrizen können multipliziert und/oder gefaltet werden, um die gewünschte Laserleistung zu erhalten. Obige Maßnahmen sind insbesondere für die Endbereiche eines mäanderförmigen Werkstoffabtrags von Vorteil.

Darüber hinaus kann der Bearbeitungsprozeß auch über weitere Stellglieder gesteuert werden. Dazu zählt z.B. eine adaptive Optik, die etwa über piezoelektrische Elemente einstellbar ist, wodurch der Laserstrahl beispielsweise gezielt defocussiert werden kann, mit einer Beeinflussung der Strahlungsleistung des Lasers. Weiterhin kann z.B. die O₂-Zufuhr und/oder die Intensität der Laserstrahlung gesteuert werden. Z.B. bei der Verwendung eines
Nd:YAG-Lasers kann als Stellglied auch ein Shutter eingesetzt werden, der den Strahlengang des Laserstrahls gezielt unterbricht. Ein derartiger Shutter kann z.B. auf einem mechanischen, elektro- oder magnetooptischen Prinzip basieren (Kerr-Effekt, LC- Shutter, usw.)

Weiterhin können auch z.B. zwei oder mehrere Stellgrößen zur Prozeßregelung verwendet werden. Bei einer 2-Größenregelung können z.B. ein Geschwindigkeits- und ein Strahlungsleistungsmodulationssignal als Stellgrößen zur Prozeßregelung eingesetzt werden. Diese Stellgrößen können z.B. in vorteilhafter Weise in einem Multiprozessorsystem in einer Echtzeit-Parallelverarbeitung ermittelt werden. Dadurch kann die Rechenzeit zur Ermittlung der Stellgrößen stark reduziert werden, wodurch die Ansprechzeiten der Prozeßgrößen sowie die Regelgenauigkeit verbessert werden können.

Erfindungsgemäß kann weiterhin die Bearbeitungstiefe durch einen Strahlungssensor erfaßt werden, der die von der Wechselwirkungszone emittierte Wärmestrahlung und damit einen Wert, der mit dem Volumen der Wechselwirkungszone in Verbindung gebracht werden kann, ermittelt. Dadurch kann, etwa durch die Auswertung der Intensitäten verschiedener Wellenlängen, eine Bearbeitungstiefe erhalten werden. Der Strahlungssensor liefert ein Signal für die Ist-Abtragsmenge der Bearbeitung. Durch die Kombination der Messung der absoluten Tiefe (Bearbeitungstiefe) der Bearbeitungsstelle und dem relativen Abstandssignal können während der Bearbeitung in einer Abtragsschicht Einflüsse wie Änderungen der Bearbeitungstemperatur, Änderung der Strömungsverhältnisse, Änderung der Materialzusammensetzungen, usw., erfaßt werden. Zudem wird eine sehr genaue Steuerung der Laserleistung möglich.

In einer weiteren vorteilhaften Ausgestaltung der Erfindung werden die Signale des Abstandssensors und/oder des Strahlungssensors während der Ausgabe eines Laserpulses erfaßt und damit Steuerpulse für mindestens einen unmittelbar nachfolgenden Laserpuls erzeugt. Die Erfassung der Regelgrößen und die Ermittlung der Steuerpulse ist damit von der Ausgabe der Steuerpulse entkoppelt. Dadurch wird die Eigendynamik des Lasers aus dem Regelkreis ausgekoppelt und ist nicht mehr in dem Übertragungsglied der Regelung und damit in der Regelstrecke enthalten. Da die Frequenz der Steuerpulse nur in bestimmten Grenzen geändert wird, ist auch die Eigendynamik des Lasers annähernd konstant. Dadurch kann eine in hohem Maße reproduzierbare Strahlungsleistung des Lasers erzeugt werden, die für den Abtrag von definierten Materialschichten von geringer Dicke notwendig ist.

In weiteren vorteilhaften Ausführungsformen der Erfindung wird der Ist-Abstand und/oder die Bearbeitungstiefe über eine Gruppe von Laserpulsen erfaßt und anschließend gemittelt. Dadurch können z.B. durch elektrische Störungen hervorgerufene Schwankungen in den erfaßten Signalen ausgeglichen werden. Diese Schwankungen können durch elektromagnetische Felder hervorgerufen werden, die auf die Übertragungsleitungen der Sensoren einwirken. Weiterhin kann dadurch die Erfassung der Meßsignale an die Rechenleistung der Steuereinheit angepaßt werden.

Darüber hinaus kann zu Beginn der Bearbeitung ein erster Steuerpuls vorgegeben werden. Dies ist vorteilhaft, da zu Beginn der Bearbeitung noch kein Laserpuls auf das Werkstück aufgebracht wurde, so daß die Regelgröße keine Informationen über den Prozeßzustand enthält.

Des weiteren kann bei der linienförmigen Materialabtragung in mehreren aufeinanderfolgenden Schichten, z.B. zur Herstellung von Hohlräumen in massiven Werkstücken, am Anfang einer neuen Abtragschicht der gemessene Ist-Abstand mit dem Soll-Abstand der letzten Abtragschicht verglichen werden. Dadurch wird in vorteilhafter Weise eine Differenz zwischen der real erzielten Abtragtiefe während der letzten Bearbeitungsschicht und der eingestellten Soll-Abtragstiefe der letzten Abtragschicht erhalten. Diese Differenz kann als Korrekturbetrag oder -faktor für die Regelung von weiteren Abtragschichten verwendet werden. Durch diese Korrektur kann eine Abtragstiefenabweichung ausgeglichen werden, die sich - ohne Korrektur - von Bearbeitungsschicht zu Bearbeitungsschicht addiert. Dadurch kann eine beträchtliche Steigerung der Bearbeitungsgenauigkeit erreicht werden.

Zur Ermittlung der Steuerpulse, die als Stellgrößen des Bearbeitungsprozesses die Strahlungsleistung des Lasers direkt beeinflussen, können auch n-te Ableitungen der Soll-/Istwertabweichung und/oder der Bearbeitungstiefenabweichung ermittelt werden. Dadurch können schnellere und genauere Systemantworten auf Änderungen der Eingangsgrößen erzielt werden. Neben linearen Zusammenhängen können auch P, PI oder PID-Regelalgorithmen zur Anwendung kommen. Weiterhin können auf Fuzzy-logic basierende Regelsysteme zur Ermittlung der Stellgrößen eingesetzt werden.

Die Steuerpulse zur Ansteuerung der Laseranregungseinheit können aus der Soll-/Istwertabweichung, der Bearbeitungstiefenabweichung oder der Abstandsdifferenz berechnet werden. Zur Verringerung der Rechenzeit kann es aber auch von Vorteil sein, die Steuerpulse bzw. die Stellgrößen aus einer Matrix auszulesen. Die Steuerpulse sind in dieser Weiterbildung der Erfindung fest abgespeichert und können als Funktion der Soll-/Istwertabweichung, der Bearbeitungstiefenabweichung oder der Abstandsdifferenz aus der Matrix aus einem Speicher der Steuereinheit ausgelesen werden. Die Steuerpulse sind hierbei unter vergleichbaren Bedingungen während Versuchsbearbeitungen ermittelt und abgespeichert worden.

Die Matrixwerte können weiterhin auch eine funktionelle Abhängigkeit von der Relativgeschwindigkeit zwischen dem Werkstück und dem Laserstrahl aufweisen. Diese geschwindigkeitsabhängigen Werte können vorab gespeichert werden, es kann aber auch eine Ermittlung entsprechender Stellgrößen nach dem Lesevorgang aus der Matrix von Vorteil sein (Rechenzeitverkürzung). Hierbei können geschwindigkeitsabhängige Faktoren additiv und/oder multiplikativ mit dem gelesenen Matrixwert kombiniert werden.

Die Steuerpulse können als Absolutwerte berechnet oder aus einer Matrix ausgelesen werden. Zur Verringerung der Rechenzeit kann es von Vorteil sein, die Steuerpulse nicht als Absolutwerte zu berechnen, sondern nur deren Inkrement oder Dekrement zu ermitteln. Die erforderliche Rechenzeit für das Addieren eines kleinen Inkrements oder das Subtrahieren eines kleinen Dekrements, jeweils im Vergleich zu dem Absolutwert, ist aufgrund der kleineren erforderlichen Bit-Anzahl der in der Recheneinheit vorliegenden Variablen im Vergleich zur Verarbeitung der absoluten Steuerpulse geringer.

Die aufgrund der Steuerpulse erzeugten Laserpulse sind systembedingt und frequenzabhängig zu den Steuerpulsen zeitverzögert. Wird ein CO₂-Laser zum Beispiel mit 10 kHz-Steuerpulsen angesteuert, so beträgt die Zeitkonstante zwischen dem Steuerpuls und dem zugehörigen Laserpuls z.B. ca. 15 µs. Das Einsetzen des Laserpulses besitzt eine Schwankungsbreite von z.B. ca. ± 2 µs.
Diese zeitliche Schwankungsbreite des Einsetzens des Laserlichts wird als Jitter bezeichnet. Dieser Jitter kann dadurch gesenkt werden, daß dem Steuerpuls ein Vorimpuls aufgeschaltet wird. Dieser Vorimpuls, dessen Fläche nicht von den Regelgrößen beeinflußt wird, besitzt eine im Vergleich zu den Steuerpulsen überhöhte Amplitude und eine im Vergleich zu den Steuerpulsen geringere Pulsweite. Das Einsetzen des Vorimpulses ist so gesteuert, daß sich die ansteigende Flanke des Vorimpulses mit der ansteigenden Flanke des Steuerpulses deckt. Zudem wird durch den Vorimpuls auch die Ansprechzeit, d.h. die Zeitkonstante zwischen dem Steuerpuls und dem dazugehörigen Laserpuls, verringert. Bei 10 kHz-Laserpulsen eines CO₂-Lasers können mit Vorimpuls Ansprechzeiten von z.B. 3 µs und einem Jitter von z.B. ± 1 µs erhalten werden. Durch die Anwendung des Vorimpulses wird in vorteilhafter Weise die mögliche Änderung der Pulsfrequenz bzw. der Pulspausen zwischen aufeinanderfolgenden Laserpulsen zur Änderung der Stellgröße Laserleistung vergrößert, ohne das Ansprechen der Laserpulse auf die Steuerpulse so stark zu ändern, daß der gewünschte reproduzierbare Feinabtrag nicht mehr gewährleistet ist. Diese Pulsfrequenzänderung bei Aufschaltung eines Vorimpulses liegt vorzugsweise bei z.B. ca. 10 ± 2 kHz für einen gepulsten CO₂-Laser.

In einer weiteren vorteilhaften Ausgestaltung der Erfindung wird die benötigte Einschaltzeit des Lasers verringert und zeitdiskreter realisiert. Dazu wird der Laser durch Simmern unterhalb der Laserschwelle durch Glimmentladungen etwa auf Betriebstemperatur gehalten, die für ein Arbeiten des Lasers erforderlich ist. Die durch das Simmern eingebrachte Energie liegt knapp unterhalb der Energie, die nötig wäre, den Laser über die Laserschwelle zu heben. Dies ist besonders vorteilhaft, wenn zur Herstellung besonderer Konturen im Werkstück das Material nur bereichsweise abgetragen wird. Hierbei wird das Werkstück oder der Laserkopf kontinuierlich während eines Arbeitsgangs bewegt und der Laser wird durch Simmern in einem angeregten Zustand gehalten, wenn bestimmte Werkstückbereiche überfahren werden, in denen keine Bearbeitung erfolgen soll. Während der Bearbeitung zwischen den einzelnen Laserpulsen wird ein Simmern nicht angewandt, da sich der Laser ohnehin in seinem Betriebszustand befindet. Durch Simmern wird gewährleistet, daß der erste Steuerpuls auch einen Laserpuls verursacht.

Die Aufgabe wird weiterhin durch ein Verfehren gemäß dem Anspruch 13 und eine Vorrichtung gemäß dem Anspruch 14 gelöst.

In weiteren vorteilhaften Ausgestaltungen der Erfindung weist die Meßeinrichtung einen Strahlungssensor auf, mit dessen Signal eine Bearbeitungstiefe ermittelt wird.

Einer der wesentlichen Vorzüge der Erfindung liegt darin, daß die Eigendynamik des Lasers aus dem Regelkreis der Regelung ausgekoppelt werden kann und nicht in dem Übertragungsglied enthalten ist. Dadurch kann ein Ist-Laserpuls gemessen und der nächste Laserpuls oder folgende Laserpulse entsprechend geregelt werden (im Gegensatz zur Regelung des gemessenen Ist-Laserpulses). Weiterhin wird die Eigendynamik des Lasers durch eine sich nur in bestimmten Grenzen ändernde Pulsfrequenz und die Aufschaltung eines Vorimpulses auf den Steuerpuls annähernd konstant gehalten. Darüber hinaus kann die Ansprechzeit zwischen einem Steuerpuls und dem dazugehörigen Laserpuls durch Simmern und Aufschaltung eines Vorimpulses verringert werden. Dadurch verstreicht zwischen einer Laseranregung und einer Emittierung von Laserlicht ein minimierter Zeitraum und die Schwankungsbreite des Einsetzens des Laserlichts (Jitter) wird verringert.

Weiterhin wird durch die Erfindung eine sehr hohe Puls- zu Puls-Stabilität durch die Verringerung der Streubreite der Laserpulse erreicht.

Ein weiterer wesentlicher Vorzug der Erfindung liegt darin, daß eine dreidimensionale Ansteuerung des Lasers möglich wird. Durch die Ermittlung des Abstands zwischen einem Bezugspunkt und der Oberfläche der Bearbeitungsstelle kann die Laserstrahlung zu einem in einer Ebene liegenden geometrisch genau definierten Ort gesteuert werden. Durch Hinzunahme der Erfassung der Bearbeitungstiefe als Regelgröße geht auch die "Einwirktiefe" der Laserstrahlung in die Regelung ein. Damit ist eine außerordentlich genaue Ansteuerung des Lasers möglich, die für den Feinabtrag von Material von Vorteil ist.

Weitere Vorzüge und Besonderheiten der Erfindung ergeben sich aus der Beschreibung von Ausführungsbeispielen anhand der Zeichnungen. Es zeigen:
- Fig. 1: ein schematisches Blockschaltbild einer Laserabtragsvorrichtung;
- Fig. 2: eine schematische Darstellung der Bearbeitungsstelle;
- Fig. 3: ein Flußdiagramm zur Durchführung des erfindungsgemäßen Verfahrens;
- Fig. 4: ein Flußdiagramm einer weiteren Ausführungsform zur Durchführung des erfindungsgemäßen Verfahrens;
- Fig. 5: ein zeitliches Ablaufdiagramm mit Steuerpulsen und dazugehörigen Laserpulsen.

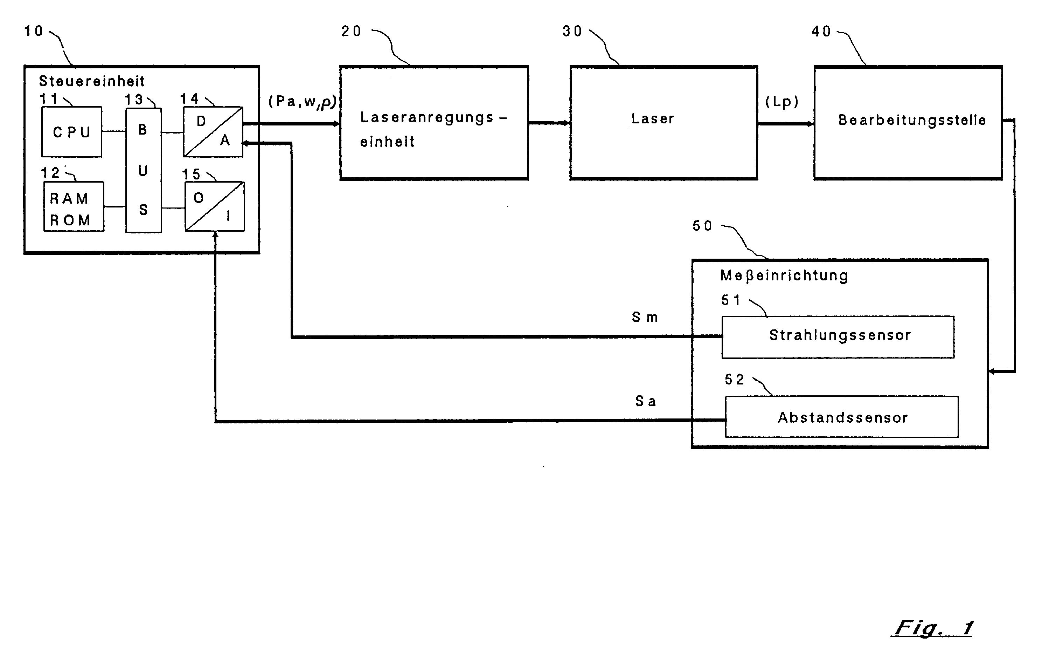

Das schematischen Blockschaltbild gemäß Fig. 1 zeigt eine Steuereinheit 10 mit einer CPU (central processing unit) 11, einem Speicher 12 mit RAM (random access memory) und ROM (read only memory), einem Adreß- und Datenbus 13, einem D/A(digital/analog)-Wandler (A/D(analog/digital)-Wandler) und einer I/O(input/output)-Einheit 15. Nicht dargestellt sind in dieser schematischen Darstellung die Ein- und Ausgabeeinheiten für die Steuereinheit, wie z.B. eine Tastatur, ein Bildschirm und ein Drucker. Weiterhin kann die Steuereinheit 10 an die Programmsteuerung einer CNC-Maschine angeschlossen werden und mit einem LAN (local area network) und/oder einem WAN (wide area network) verbunden sein, zur Integration in eine CIM (computer integrated manufacturing)-Fertigung. Die Steuereinheit gibt über den D/A-Wandler 14 Steuerpulse Pa,w,p an eine Laseranregungseinheit 20 aus, zur Ansteuerung eines Lasers 30. Die Laseranregungseinheit 20 kann zum Beispiel ein HF-Generator sein, der direkt mit Laserelektroden des Lasers 30 verbunden ist und dort eine Glimmentladung erzeugt. Der Laser 30 kann ein Festkörper oder ein Gaslaser sein, der in der Regel gepulst betrieben wird. Vorzugsweise wird zur Materialabtragung ein CO₂-Laser verwendet.

Der Laser 30 gibt über die Steuerpulse Pa,w,p und angesteuert durch die Laseranregungseinheit 20 Laserpulse Lp aus. Diese Laserpulse Lp werden durch eine nicht dargestellte Optik auf eine Bearbeitungsstelle 40 gerichtet. Die Bearbeitungsstelle 40 wird durch eine Meßeinrichtung 50 überwacht. Die Meßeinrichtung 50 enthält einen Abstandssensor 52 und ggf. zusätzlich einen Strahlungssensor 51.

Durch den Strahlungssensor 51 kann zum Beispiel die Wärmestrahlung der Wechselwirkungszone zwischen der Laserstrahlung und dem bearbeiteten Material, d.h. der Bearbeitungsstelle 40 im Werkstück, erfaßt werden. Aus einem durch die Steuereinheit 10 von dem A/D-Wandler 14 erfaßten Signal Sm des Strahlungssensors 51 kann z.B. auf die Größe der Wechselwirkungszone geschlossen werden. Dadurch kann ein der Tiefe der Wechselwirkungszone entsprechender Wert ermittelt werden.

Der Abstandssensor 52 ermittelt den Abstand zwischen einem festen Bezugspunkt 44 und der Oberfläche 45 der Bearbeitungsstelle 40. Ein Signal Sa des Abstandssensors 52 wird von der Steuereinheit 10 über die I/O-Einheit 15 erfaßt.

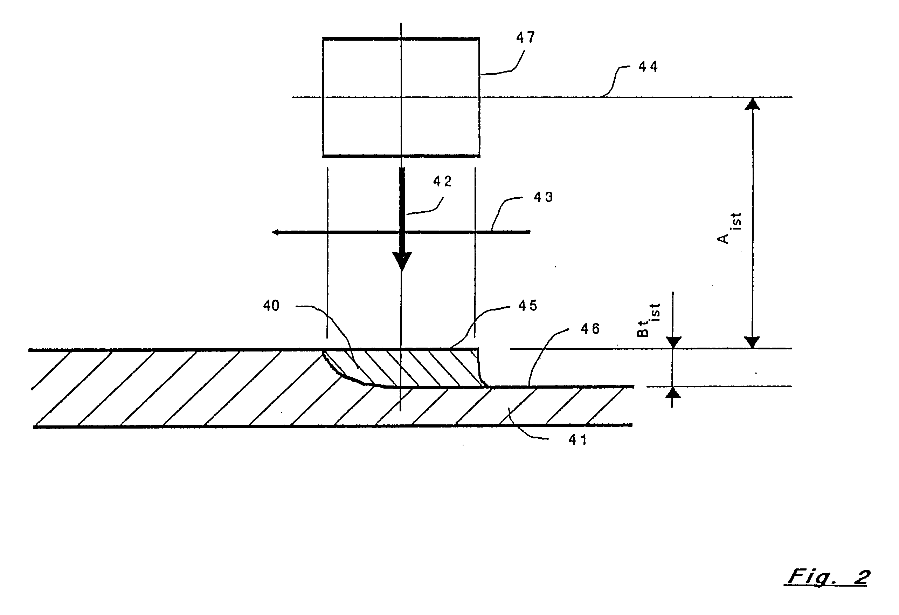

In Fig. 2 ist ein Abtragsvorgang in einem Werkstück 41 schematisch dargestellt. Ein Laserstrahl 42 und ggf. ein Hilfsgas treffen in dieser beispielhaften Darstellung senkrecht auf die Oberfläche 45 des Werkstücks 41 unter Bildung einer Bearbeitungsstelle 40 auf. Die relative Vorschubrichtung zwischen Werkstück 41 und Laserstrahl 42 ist durch den Pfeil 43 angegeben. Zwischen einem Bezugsort 44, z.B. an einem Laserkopf 47, und der Oberfläche 45 der Bearbeitungsstelle 40 ist ein Ist-Abstand Aᵢₛₜ eingezeichnet, der vom Abstandssensor 52 gemessen wird. Des weiteren ist zwischen der Oberfläche 45 der Bearbeitungsstelle 40 und einer Bodenlinie 46 eine Bearbeitungstiefe Btᵢₛₜ eingezeichnet, die über den Strahlungssensor 51 ermittelt werden kann. Der Strahlungssensor 51 und der Abstandssensor 52 können an der Laserstrahlungsachse oder an einem anderen geometrischen Ort angeordnet sein (nicht dargestellt).

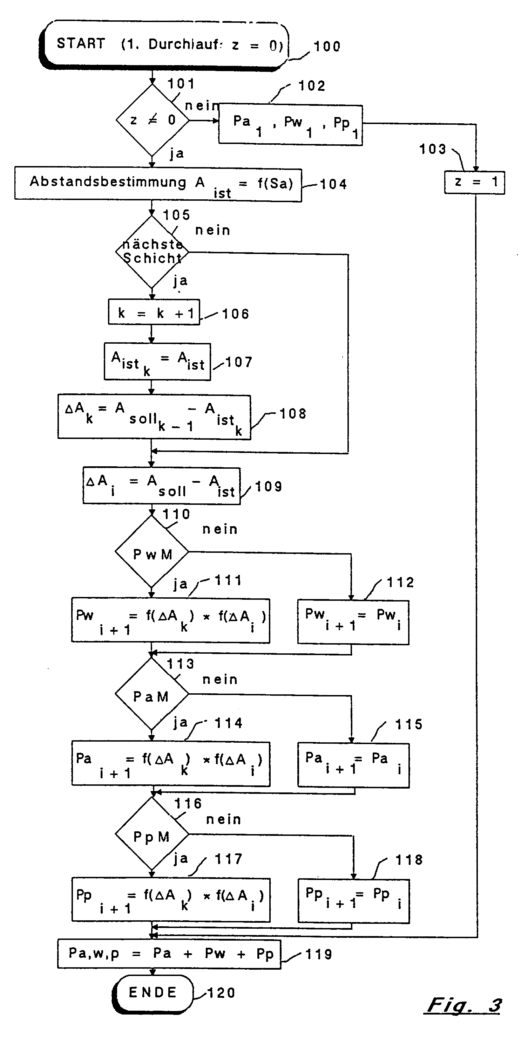

In dem schematischen Flußdiagramm des Verfahrens gemäß der Ausführungsform nach Fig. 3 ist ein von der Steuereinheit 10 durchgeführter Programmablauf dargestellt. Dieser Programmablauf ist zum Beispiel im RAM oder im ROM an einer definierten Adresse gespeichert und kann z.B. von einem Bediener oder CNC-gesteuert aufgerufen werden. Beim ersten Programmdurchlauf wird zum Start (Schritt 100) ein Durchlaufzähler z zu Null gesetzt. Da im ersten Programmdurchlauf die Regelgrößen Aᵢₛₜ und/oder Btᵢₛₜ Null oder fehlerhaft sein können, wird im Schritt 101 ermittelt, ob dieser erste Programmdurchlauf vorliegt. Wenn das der Fall ist, werden für die Pulsamplitude, die Pulsweite und die Pulspause vorgespeicherte Werte Pa₁, Pw₁, Pp₁ verwendet (Schritt 102). Anschließend wird der Durchlaufzähler z auf 1 gesetzt (Schritt 103) und es erfolgt eine Verzweigung zu Schritt 119. In Schritt 120 wird dann entweder das Programm beendet oder es wird zurück zu Schritt 101 verzweigt. Beim nächsten Programmdurchlauf wird aus dem Signal Sa des Abstandssensors 52 der Abstand Aᵢₛₜ ermittelt (Schritt 104). Der Abstand Aᵢₛₜ kann bei jedem Programmdurchlauf im Schritt 104 berechnet oder auch aus einer Matrix ausgelesen werden. Darauf folgend wird ermittelt, ob der Ist-Durchlauf der erste Durchlauf einer neuen Abtragschicht ist (Schritt 105). Sofern dies der Fall ist, wird eine Abstandsdifferenz (ΔAₖ) gebildet, die der Differenz zwischen dem Soll-Abstand der letzten Abtragschicht 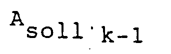
und dem in Schritt 104 erfaßten Ist-Abstand 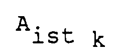
entspricht (Schritte 106 - 108). Ist dieser Durchlauf nicht der erste Durchlauf einer neuen Abtragschicht, so wird direkt zu Schritt 109 verzweigt. Dort wird zur Bildung einer Soll-/Istwertabweichung ΔAᵢ die Differenz zwischen einem Soll-Abstand Aₛₒₗₗ und dem Ist-Abstand Aᵢₛₜ gebildet (Schritt 109). Der Soll-Abstand Aₛₒₗₗ kann z.B. als fest abgespeicherter Wert vorliegen, von einem Bediener eingegeben werden oder über eine CNC-Steuerung übermittelt werden. Weiterhin können die Soll-/Istwertabweichungen ΔAᵢ für jeden Durchlauf berechnet oder aus einer Matrix ausgelesen werden.

Nach der Ermittlung der Soll-/Istwertabweichung ΔAᵢ werden die Steuerpulse Pa,w,p in Abhängigkeit der Soll-/Istwertabweichung ΔAᵢ ermittelt (Schritte 110 - 119).

Die Steuerpulse Pa,w,p weisen eine definierte Amplitude, Pulsweite und Pulspause auf. Die Pulsamplitudenanteile Pa, die Pulsweitenanteile Pw und die Pulspausenanteile Pp der Steuerpulse Pa,w,p werden in diesem Ausführungsbeispiel getrennt ermittelt. Die Ermittlung kann aber auch zusammengefaßt werden, wobei eine Kenngröße ermittelt wird, die die Pulsamplitude, die Pulsweite und die Pulspause der Steuerpulse Pa,w,p charakterisiert. Wird in Schritt 110 zu Schritt 112 verzweigt, so wird die Pulsweite des Steuerpulses Pa,w,p nicht verändert, und es wird für den nächsten Steuerpuls Pa,w,p der vorherige Wert der Pulsweite verwendet. Soll dagegen eine Pulsweitenmodulation vorgenommen werden, so wird zu Schritt 111 verzweigt. In Schritt 111 kann die nächste Pulsweite Pwᵢ₊₁ als Funktion der Abstandsdifferenz ΔAₖ (Korrekturfaktor) und der Soll-/Istwertabweichung ΔAᵢ ermittelt werden. In den Schritten 113 - 115 wird ermittelt, ob die Pulsamplitude des Steuerpulses Pa,w,p geändert werden soll. Ist dies der Fall, so wird zu Schritt 114 verzweigt, in dem die Pulsamplitude Paᵢ₊₁ für den nächsten Steuerpuls Pa,w,p als eine Funktion der Abstandsdifferenz ΔAₖ und der Soll-/Istwertabweichung ΔAᵢ ermittelt werden kann. Ist dies nicht der Fall, so wird für die nächste Pulsamplitude die vorherige Pulsamplitude übernommen (Schritt 115). Im Schritt 116 wird ermittelt, ob eine Pulspause und damit die Pulsrepititionsrate (Pulsfrequenz) moduliert werden soll, was in Schritt 117 durchgeführt wird, wobei in Schritt 118 der vorhergehende Wert für den nächsten Pulspausenanteil Ppᵢ₊₁ gesetzt wird. In Schritt 119 werden dann die Anteile der Pulsamplitude, der Pulsweite und der Pulspause zu dem endgültigen Steuerpuls Pa,w,p zusammengesetzt. In den Schritten 111, 114 und/oder 117 können die Pulsweiten-, die Pulsamplituden und die Pulspausenanteile der Steuerpulse Pa,w,p auch aus Matrizen ermittelt werden. Diese Matrizen können vorgespeicherte Werte der Pulsweiten-, der Pulsamplituden- und der Pulspausenanteile der Steuerpulse Pa,w,p in Abhängigkeit von mindestens der Soll-/Istwertabweichung ΔAᵢ enthalten. Zudem kann als weitere Dimension ein Korrekturfaktor, z.B. die Abstandsdifferenz ΔAₖ für die Matrix verwendet werden. In den Schritten 111, 114 und/oder 117 wird jeweils der Absolutwert der Steuerpulsanteile ermittelt. Es können aber auch Inkremente oder Dekremente ermittelt werden, die dann jeweils zu vorhandenen Absolutwerten addiert bzw. subtrahiert werden. In Schritt 120 wird dann zu Schritt 100 verzweigt (nicht dargestellt) oder der Programmablauf wird abgebrochen.

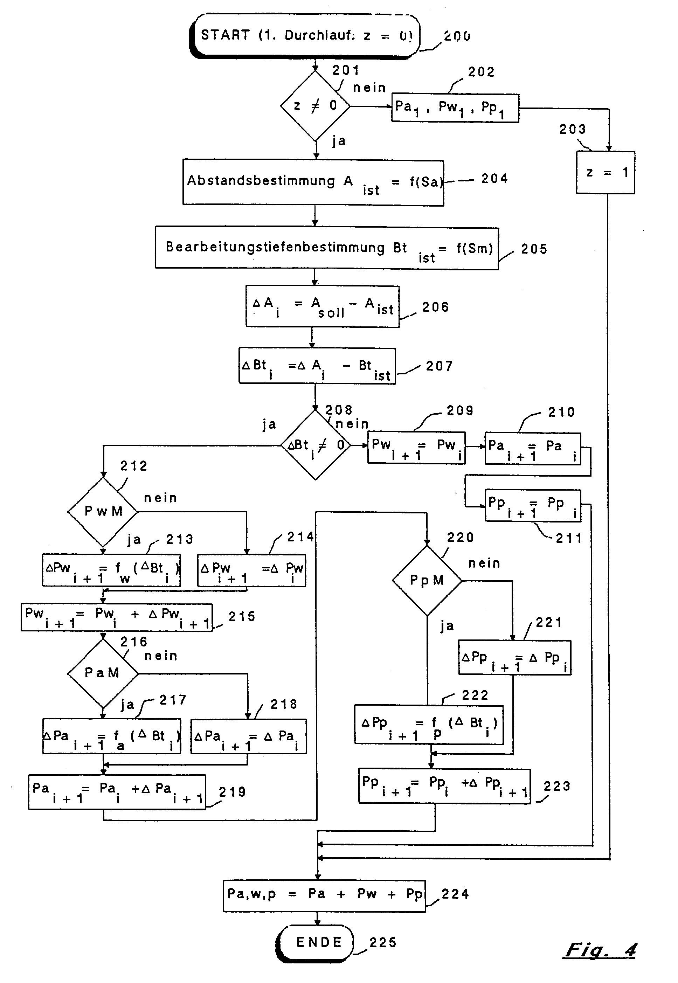

Fig. 4 zeigt ein weiteres Flußdiagramm für eine andere Ausführungsform des erfindungsgemäßen Verfahrens. Im folgenden wird auf Funktionsblöcke, die zu den unter Fig. 3 beschriebenen identisch sind, nicht mehr eingegangen. In einem Schritt 205 wird die Bearbeitungstiefe Btᵢₛₜ als eine Funktion des Signals Sm des Strahlungssensors 51 ermittelt. Die Bearbeitungstiefe Btᵢₛₜ kann auch aus einer Matrix ausgelesen werden. Daraufhin wird in Schritt 206 die Soll-/Istwertabweichung ΔAᵢ aus einer Differenz des Soll-Abstands Aₛₒₗₗ und des Ist-Abstands Aᵢₛₜ ermittelt. In Schritt 207 wird dann aus einer Differenz der in Schritt 206 ermittelten Soll-/Istwertabweichung ΔAᵢ und der Bearbeitungstiefe Btᵢₛₜ eine Bearbeitungstiefenabweichung ΔBtᵢ ermittelt. In dem Fall, daß die Bearbeitungstiefenabweichung ΔBtᵢ einen Wert ungleich Null (oder größer als ein Grenzwert) annimmt, so ist eine Änderung der Strahlungsleistung des Lasers 30 nötig, da die Abtragschicht zu tief oder zu flach abgetragen wird. Wird jedoch die Bearbeitungstiefenabweichung ΔBtᵢ zu Null (oder kleiner als ein Grenzwert) ermittelt, so wird der Steuerpuls Pa,w,p nicht geändert (Schritte 209, 210, 211). In einem Schritt 213 wird ein Pulsweiteninkrement oder -dekrement für den nächsten Puls ΔPwᵢ₊₁ als Funktion der Bearbeitungstiefenabweichung ΔBtᵢ ermittelt. ΔPwᵢ₊₁ kann auch aus einer Matrix ausgelesen werden. In einem Schritt 215 wird dann der Absolutwert des Pulsweitenanteils Pwᵢ₊₁ für den nächsten Steuerpuls additiv aus dem Pulsweitenanteil des letzten Pulses und dem Inkrement oder Dekrement ermittelt. Anstatt der Ermittlung der Inkremente bzw. Dekremente (Schritte 213, 215) kann auch der Absolutwert des Pulsweitenanteils Pwᵢ₊₁ ermittelt werden. Die Ermittlung kann durch eine Berechnung und/oder durch ein Auslesen aus einer Matrix erfolgen.

Die Schritte 216 bis 223 sind mit den Schritten 212 bis 215 nur dadurch unterschiedlich, daß in den Schritten 216 bis 219 die Pulsamplitudenanteile und in den Schritten 220 - 223 die Pulspausenanteile der Steuerpulse Pa,w,p ermittelt werden, so daß das oben Beschriebene auch für diese Schritte gilt.

In einem Schritt 224 werden dann die Pulsamplituden-, die Pulsweiten- und die Pulspausenanteile zu dem Steuerpuls Pa,w,p zusammengesetzt. In einem Schritt 225 wird anschließend zum Start (Schritt 200) (nicht dargestellt) verzweigt oder der Programmablauf wird abgebrochen.

Die Entscheidung, ob eine Pulsweitenmodulation, eine Pulsamplitudenmodulation und/oder eine Pulspausenmodulation (Schritte 111, 114, 117) vorgenommen werden sollen, kann durch den Bediener vorgenommen werden. Die Verzweigungsentscheidungen können auch über einen nicht dargestellten Unterprogrammablauf in Abhängigkeit von voreingestellten oder ermittelten Prozeßparametern getroffen werden.

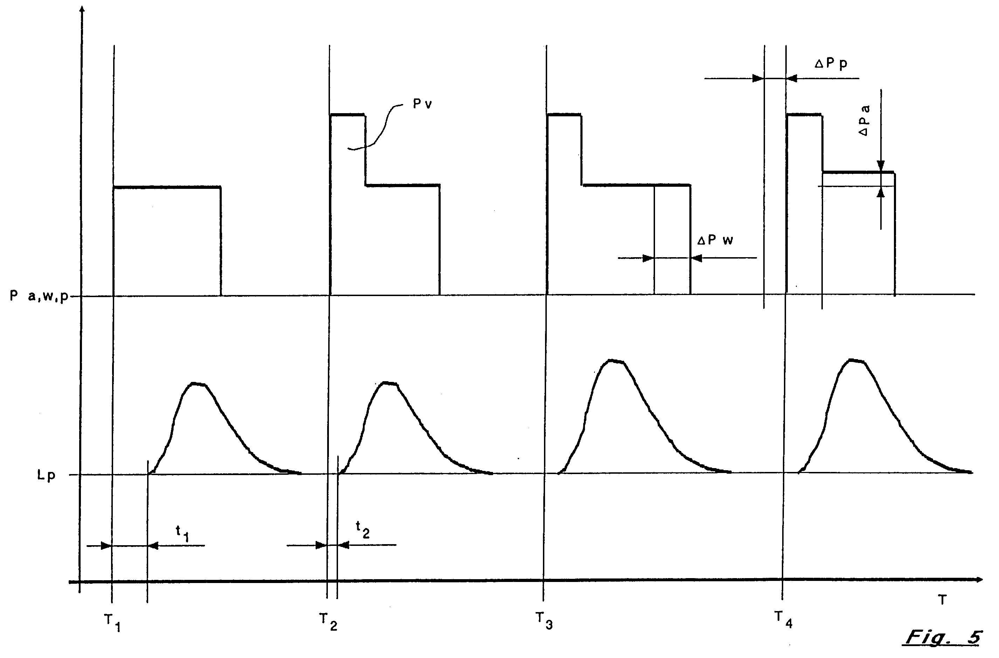

In Fig. 5 sind beispielhaft vier verschiedene Steuerpulse Pa,w,p und die dazugehörigen Laserpulse Lp in einem zeitlichen Ablaufdiagramm dargestellt. Die Steuerpulse Pa,w,p werden von der Steuereinheit 10 generiert worden, wobei der Laser 30 die Laserpulse Lp mit einer systembedingten Verzögerung t₁, t₂ (Ansprechzeit, Zeitkonstante) ausgibt. Die Ansprechzeit t₁, t₂ ist z.B. abhängig von der Pulsfrequenz aufeinanderfolgender Steuerpulse Pa,w,p, dem Betriebszustand des Lasers und der Pulsform der Steuerpulse Pa,w,p. In dieser Darstellung wird zum Zeitpunkt T₁ ein Steuerpuls Pa,w,p in Form eines Rechtecksignals generiert. Dieser Steuerpuls Pa,w,p verursacht einen Laserpuls Lp, der um t₁ zeitverzögert ausgegeben wird.

Wird nun dem Steuerpuls Pa,w,p zum Zeitpunkt T₂ ein Vorimpuls Pv aufgeschaltet, so ergibt sich eine Zeitverzögerung t₂ des Laserpulses Lp, für die t₁ > t₂ gilt. Durch den Vorimpuls wird somit die Ansprechzeit der Laserpulse verkürzt. Dadurch ist es möglich, auch die Pulspause in bestimmten Grenzen zu variieren, ohne die Reproduzierbarkeit der Laserpulse im Hinblick auf einen Feinabtrag von Material zu stark zu beeinflussen.

Die Strahlungsleistung des Lasers 30 kann durch eine Pulszu-Puls-Änderung der Pulsamplitude ΔPa, der Pulsweite ΔPw und der Pulspause ΔPp der Steuerpulse Pa,w,p geändert werden. Zum Zeitpunkt T₃ weist der Steuerpuls Pa,w,p im Vergleich zum Steuerpuls Pa,w,p zum Zeitpunkt T₂ eine um ΔPw größere Pulsweite auf, wodurch der Steuerpuls Pa,w,p eine vergrößerte Fläche besitzt und damit der Laser 30 einen Laserpuls mit einer höheren Leistung ausgibt. Zum Zeitpunkt T₄ ist im Vergleich zum Zeitpunkt T₂ die Pulsamplitude um ΔPa vergrößert und der Steuerpuls setzt um ΔPp früher ein. Durch die Erhöhung der Pulsamplitude um ΔPa vergrößert sich wiederum die dem Steuerpuls Pa,w,p entsprechende Leistung des zugehörigen Laserpulses Lp. Durch das Versetzen des Steuerpulses um ΔPp steigt die mittlere Energiedichte der Laserpulse Lp, sofern die Fläche der Steuerpulse in dem betrachteten Zeitraum konstant gehalten oder zumindest nicht verkleinert wird.

Durch den Vorimpuls Pv wird weiterhin der Jitter verringert, was zu einer Optimierung der Reproduzierbarkeit der Laserpulse Lp beiträgt. Mit einer optimierten Reproduzierbarkeit der Laserpulse Lp erhöht sich auch die Feinheit der Regelung und damit die Genauigkeit der abgetragenen Werkstoffschichten, wodurch die Tiefe der jeweilig abgetragenen Schicht minimiert werden kann. Zudem kann die Bearbeitungsgüte, d.h. die Bearbeitungsrauhigkeit, durch eine Optimierung der Reproduzierbarkeit der Laserpulse Lp und der Möglichkeit einer Reduzierung der Laserleistung erhöht werden.

Außerdem kann zum Überfahren bestimmter Werkstückbereiche für eine fliegende Bearbeitung (intermittierende Bearbeitung) der Werkstücke das Simmern des Lasers eingesetzt werden. Das Simmern kann zugeschaltet werden, weg der Laser längere Zeit ausgeschaltet war, und es wird z.B. erst in dem Moment ausgeschaltet, in dem der erste Laserpuls generiert wird, d.h. das Simmern wird an der ansteigenden Flanke des Laserpulses abgeschaltet. Durch das Simmern kann die Zeitverzögerung t₁, t₂ ebenfalls verringert werden, wenn der Laser längere Zeit ausgeschaltet war (fliegende Bearbeitung).

Zur Ermittlung der Soll-/Istwertabweichung ΔAᵢ und/oder der Bearbeitungstiefenabweichung ΔBtᵢ können anstatt der Differenzenbildung auch n-te Ableitungen der Differenzen zu deren Ermittlung eingesetzt werden. Außerdem können Regelalgorithmen zur Ermittlung der Soll-/Istwertabweichung ΔAᵢ. und der Bearbeitungstiefenabweichung ΔBtᵢ verwendet werden (z.B. P-, I-, PI-, PID-Regelalgorithmen). Der Vorteil der Anwendung von Regelalgorithmen liegt in einem schnelleren Ansprechen der Stellgröße Strahlungsleistung (bzw. der Steuerpulse) auf die von der Meßeinrichtung erfaßten Regelgrößen.

## Patentansprüche

1. Verfahren zum Bearbeiten von Werkstücken mittels der von einem Laser (30) emittierten Laserstrahlung, bei dem die von einer Bearbeitungsstelle (40) des Werkstücks (41) kommende Strahlung erfaßt und zu Signalen verarbeitet wird und bei dem der Bearbeitungsprozeß durch mindestens eine auf der Grundlage dieser Signale erhaltene Stellgröße geregelt wird,
mit folgendem Verfahrensschritt:
(A) Ermittlung eines Ist-Abstands (Aᵢₛₜ) zwischen einem festen Bezugspunkt (44) und der Oberfläche (45) der Bearbeitungsstelle (40),
gekennzeichnet durch folgende, weitere Verfahrensschritte:
(B) Ermittlung einer Soll-/Istwertabweichung (ΔAᵢ) zwischen einem vorgegebenen Soll-Abstand (Aₛₒₗₗ) und dem erfaßten Ist-Abstand (Aᵢₛₜ),
(C) Ermittlung zumindest einer Stellgröße durch die Steuereinheit (10) entsprechend der Soll-/Istwertabweichung (ΔAᵢ),
(D) Ausgabe der ermittelten Stellgrößen an zumindest ein Stellglied.

2. Verfahren nach Anspruch 1, dadurch gekennzeichnet,
daß
- zusätzlich zur Ermittlung des Ist-Abstandes (Aᵢₛₜ) und der Bestimmung der Soll-/Istwertabweichung (ΔAᵢ) eine Bearbeitungstiefe (Btᵢₛₜ) ermittelt wird, die dem Abstand zwischen der Oberfläche (45) der Bearbeitungsstelle (40) und einer Bodenlinie (46) entspricht,
- eine Bearbeitungstiefenabweichung (ΔBtᵢ) aus der Bearbeitungstiefe (Bt ᵢₛₜ) und der Soll-/Istwertabweichung (ΔAᵢ) ermittelt wird und
- zumindest eine Stellgröße entsprechend der Bearbeitungstiefenabweichung (ΔBtᵢ) ermittelt wird.

3. Verfahren nach Anspruch 1 oder 2,
dadurch gekennzeichnet, daß als Stellgröße die Strahlungsleistung des Lasers (30) durch amplituden-, pulsweiten- und/oder frequenzmodulierten Steuerpulse (Pa,w,p), durch eine gezielte Defocussierung des Laserstrahls (42) und/oder durch einen Shutter geregelt wird und der Laser (30) den modulierten Steuerpulsen entsprechende Laserpulse (Lp) ausgibt.

4. Verfahren nach einem der Ansprüche 1 bis 3,
dadurch gekennzeichnet, daß als Stellgröße die relative Vorschubgeschwindigkeit des Werkstücks (41) durch geschwindigkeitsmodulierte Steuerpulse (Pg) geregelt wird.

5. Verfahren nach einem der Ansprüche 1 bis 4,
dadurch gekennzeichnet, daß
parallel zur Regelung des Bearbeitungsprozesses die relative Vorschubgeschwindigkeit erfaßt wird und die Strahlungsleistung des Lasers zusätzlich entsprechend der erfaßten relativen Vorschubgeschwindigkeit eingestellt wird.

6. Verfahren nach einem der Ansprüche 1 bis 5,
dadurch gekennzeichnet, daß am Anfang einer neuen Abtragschicht K der Soll-Abstand (A_{soll k-1}) der vorhergehenden Abtragschicht k-1 mit dem gemessenen Ist-Abstand (A_{isk k}) der jetzigen Abtragschicht verglichen wird, daß daraus eine Abstandsdifferenz (ΔAₖ) ermittelt wird (Schritt 105 - 108) und daß die Steuerpulse (Pa,w,p) entsprechend der Abstandsdifferenz (ΔAₖ) korrigiert werden.

7. Verfahren nach einem der Ansprüche 1 bis 6,
dadurch gekennzeichnet, daß die Meßsignale (Sa, Sm) während der Dauer eines Laserpulses (Lpᵢ) erfaßt werden und Steuerpulse (Pa,w,p) für mindestens einen diesem Laserpuls (Lpᵢ) unmittelbar nachfolgenden Laserpuls (Lpᵢ₊ₙ) ermittelt werden.

8. Verfahren nach einem der Ansprüche 1 bis 7,
dadurch gekennzeichnet, daß die dem Ist-Abstand (Aᵢₛₜ) entsprechenden Signale (Sa) und/oder die der Bearbeitungstiefe (Btᵢₛₜ) entsprechenden Signale (Sm) über mehrere Laserpulse (Lp) erfaßt und anschließend gemittelt werden, und daß aus den gemittelten Signalen Steuerpulse für die nächstfolgende Laserpuls-Gruppe erzeugt werden.

9. Verfahren nach einem der Ansprüche 1 bis 8,
dadurch gekennzeichnet, daß zu Beginn der Bearbeitung dem ersten Steuerpuls (Pa,w,p₁) eine Pulsweite, Pulsamplitude und Pulspause vorgegeben wird.

10. Verfahren nach einem der Ansprüche 1 bis 9,
dadurch gekennzeichnet, daß die Steuerpulse (Pa,w,p) des Oberflächenabstands aus einer Matrix mit mindestens der Soll-/Istwertabweichung (ΔAᵢ), der Bearbeitungstiefenabweichung (ΔBtᵢ) oder der Abstandsdifferenz (ΔAₖ) als Dimensionen ausgelesen werden.

11. Verfahren nach einem der Ansprüche 1 bis 10,
dadurch gekennzeichnet, daß zur Minimierung der Ansprechzeit der Laserstrahlung jedem Steuerpuls (Pa,w,p) ein Vorimpuls (Pv) aufgeschaltet wird.

12. Verfahren nach einem der Ansprüche 1 bis 11,
dadurch gekennzeichnet, daß der Laser (30) durch Simmern in einem angeregten Zustand unterhalb der Laserschwelle gehalten wird, wenn der Laser (30) länger als einen vorbestimmten Zeitraum deaktiviert ist.

13. Verfahren zum Bearbeiten von Werkstücken mittels der von einem Laser emittierten Laserstrahlung, bei dem das Werkstück (41) durch den Laserstrahl (42) linien- und schichtförmig in dicht nebeneinanderliegenden, aufeinanderfolgenden Schichten abgetragen wird,
dadurch gekennzeichnet, daß am Anfang einer neuen Abtragschicht K der Soll-Abstand (A_{soll k-1})zwischen einem festen Bezugspunkt (44) und der Oberfläche der vorhergehenden Abtragschicht k-1 mit einem gemessenen Ist-Abstand (A_{ist k}) zwischen einem festen Bezugspunkt (44) und der Oberfläche der jetzigen Abtragschicht verglichen wird, daß daraus eine Abstandsdifferenz (ΔAₖ) ermittelt wird und daß zumindest eine Stellgröße entsprechend der Abstandsdifferenz (ΔAₖ) korrigiert wird.

14. Vorrichtung zum Bearbeiten von Werkstücken mittels der von einem Laser (30) emittierten Laserstrahlung, mit
- einer Meßeinrichtung (50) zum Erfassen von Prozeßgrößen,
- einer Laseranregungseinheit (20) zur Ansteuerung des Lasers (30), und
- einer elektronischen Steuereinheit (10) zur Verarbeitung der Meßsignale (Sa, Sm) der Meßeinrichtung (50) und zur Steuerung eines Stellglieds,
wobei
die Meßeinrichtung (50) einen Abstandssensor (52) aufweist und die Steuereinheit (10) so ausgebildet ist, daß sie folgenden Schritt durchführt:
(A) Ermitteln eines Ist-Abstands (Aᵢₛₜ) über das Signal (Sa) des Abstandssensors (52), wobei der Ist-Abstand (Aᵢₛₜ) dem Abstand zwischen einem festen Bezugspunkt (44) und der Oberfläche (45) der Bearbeitungsstelle (40) entspricht,
dadurch gekennzeichnet, daß die Steuereinheit (10) außerdem so ausgebildet ist, daß sie folgende weitere Schritte durchführt:
(B) Ermitteln einer Soll-/Istwertabweichung (ΔAᵢ) zwischen einem vorgegebenen Soll-Abstand (Aₛₒₗₗ) und dem ermittelten Ist-Abstand (Aᵢₛₜ),
(C) Ermitteln zumindest einer Stellgröße entsprechend der Soll-/Istwertabweichung (ΔAᵢ),
(D) Ausgeben der Stellgrößen an zumindest ein Stellglied.

15. Vorrichtung nach Anspruch 14,
dadurch gekennzeichnet, daß die Meßeinrichtung (50) einen Strahlungssensor (52) aufweist, der die Bearbeitungstiefe (Btᵢₛₜ) erfaßt.

16. Vorrichtung nach Anspruch 14 oder 15,
dadurch gekennzeichnet, daß die Steuereinheit (10) so ausgebildet ist, daß sie folgende Schritte durchführt:
- Erfassen der Prozeßstrahlung der Bearbeitungsstelle (40) über das Signal (Sm) des Strahlungssensors (52) und Ermitteln einer dem Abstand zwischen der Oberfläche (45) der Bearbeitungsstelle (40) und der Bodenlinie (46) entsprechenden Bearbeitungstiefe (Btᵢₛₜ) aus dem Signal (Sm),
- Ermitteln einer Bearbeitungstiefenabweichung (ΔBtᵢ) aus der Bearbeitungstiefe (Btᵢₛₜ) und der Soll-/Istwertabweichung (ΔAᵢ) und
- Ermitteln der Stellgröße entsprechend der Bearbeitungstiefenabweichung (ΔBtᵢ).

## Claims

1. A method of machining workpieces by radiation emitted by a laser (30), wherein the radiation coming from a machined site (40) on the workpiece (41) is detected and converted into signals and wherein the machining process is controlled by at least one manipulated variable obtained on the basis of these signals, comprising the following steps:
(A) determination of an actual distance (Aᵢₛₜ) between a fixed reference point (44) and the surface (45) of the machined site (40),
characterised by the following additional steps:
(B) determination of a set/actual-value deviation (ΔAᵢ) between a preset distance (Aₛₒₗₗ) and the measured actual distance (Aᵢₛₜ),
(C) determination of at least one manipulated variable by the control unit (10), corresponding to the set/actual-value deviation (ΔAᵢ), and
(D) outputting of the determined manipulated variables to at least one final control element.

2. A method according to claim 1, characterised in that
- in addition to determining the actual distance (Aᵢₛₜ) and the set/actual-value deviation (ΔAᵢ), a machining depth (Btᵢₛₜ)is determined, corresponding to the distance between a base line (46 and the surface (45) of the machined site (40),
- a machining depth deviation (ΔBtᵢ) is determined from the machining depth (Btᵢₛₜ) and the set/actual-value deviation (ΔAᵢ), and
- at least one manipulated variable is determined, corresponding to the machining depth deviation (ΔBtᵢ).

3. A method according to claim 1 or 2, characterised in that the manipulated variable in the form of the radiation power of the laser (30) is controlled by amplitude, pulse-width and/or frequency modulated control pulses (Pa, w, p) or by deliberate defocusing of the laser beam (42) and/or by a shutter, and the laser (30) delivers pulses (Lp) corresponding to the modulated control pulses.

4. A method according to any one of claims 1 to 3, characterised in that the manipulated variable in the form of the relative speed of advance of the workpiece (41) is controlled by speed-modulated control pulses (Pg).

5. A method according to any of claims 1 to 4, characterised in that in parallel to the control of the machining process, the relative speed of advance is detected and the radiation power of the laser is additionally adjusted according to the detected relative speed of advance.

6. A method according to any of claims 1 to 5, characterised in that at the beginning of a new layer K for erosion, the set distance (A_{soll k-1}) of the preceding layer k-1 for erosion is compared with the measured actual distance (A_{ist k}) of the present layer for erosion, a differential distance (ΔAₖ) is determined therefrom (step 105 - 108) and the control pulses (Pa, w, p) are corrected in accordance with the differential distance (ΔAₖ).

7. A method according to any of claims 1 to 6, characterised in that the measuring signals (Sa, Sm) are detected during the duration of a laser pulse (Lpᵢ) and control pulses (Pa, w, p) are determined for at least one laser pulse (Lpᵢ₊ₙ) immediately following the laser pulse (Lpᵢ).

8. A method according to any of claims 1 to 7, characterised in that the signals (Sa) corresponding to the actual distance (Aᵢₛₜ) and/or the signals (Sm) corresponding to the machining depth (Btᵢₛₜ) are detected during a number of laser pulses (Lp) and subsequently averaged, and control pulses from the averaged signals are generated for the next group of laser pulses.

9. A method according to any of claims 1 to 8, characterised in that at the beginning of machining, a pulse width, pulse amplitude and interval between pulses are preset for the first control pulse (Pa, w, p₁).

10. A method according to any of claims 1 to 9, characterised in that the control pulses (Pa, w. p) for the distance from the surface are read out from a matrix comprising dimensions in the form of at least the set/actual-value deviation (ΔAᵢ), the machining depth deviation (ΔBtᵢ) or the differential distance (ΔAₖ).

11. A method according to any of claims 1 to 10, characterised in that in order to reduce the response time of the laser radiation, a pre-pulse (Pv) is superposed on each control pulse (Pa, w, p).

12. A method according to any of claims 1 to 11, characterised in that the laser (30) is kept by simmering in an excited state below the laser threshold if the laser (30) has been deactivated for longer than a predetermined time.

13. A method of machining workpieces by means of radiation emitted from a laser, wherein the workpiece (41) is eroded by the laser beam (42) along lines and layers in closely adjacent successive layers, characterised in that at the beginning of a new layer K for erosion, the set distance (A_{soll k-1}) between a fixed reference point (44) and the surface of the preceding layer k-1 for erosion is compared with a measured actual distance (A_{ist k}) between a fixed reference point (44) and the surface of the present layer for erosion, a differential distance (ΔAₖ) is determined therefrom and at least one manipulated variable corresponding to the differential distance ( Aₖ) is corrected in accordance with the manipulated variable.

14. A device for machining workpieces by means of radiation emitted by a laser (30), comprising
- a measuring device (50) for detecting process variables,
- a laser excitation unit (20) for actuating the laser (30), and
- an electronic control unit (10) for processing the measuring signals (Sa, Sm) from the measuring device (50) and for actuating a final control element,
wherein the measuring device (50) comprises a distance sensor (52) and the control unit (10) is constructed so that it carries out the following steps:
(A) determination of an actual distance (Aᵢₛₜ) via the signal (Sa) from the distance sensor (52), the actual distance (Aᵢₛₜ) corresponding to the distance between a fixed reference point (44) and the surface (45) of the machined site (40),
characterised in that the control unit (10) is also constructed so that it carries out the following additional steps:
(B) determination of a set/actual-value deviation (ΔAᵢ) between a preset distance (Aₛₒₗₗ) and the determined actual distance (Aᵢₛₜ),
(C) determination of at least one manipulated variable corresponding to the set/actual value deviation (ΔAᵢ) and
(D) outputting of the manipulated variables to at least one final control element.

15. A device according to claim 14, characterised in that the measuring device (50) comprises a radiation sensor (52) which determines the machining depth (Btᵢₛₜ).

16. A device according to claim 14 or 15, characterised in that the control unit (10) is constructed so that it carries out the following steps:
- determination of the process radiation from the machined site (40) via the signal (Sm) from the radiation sensor (52) and determination from the signal (Sm) of a machining depth (Btᵢₛₜ) corresponding to the distance between the base line (46) and the surface (45) of the machined site (40),
- determination of a machining depth deviation (ΔBtᵢ) from the machining depth (Btᵢₛₜ) and the set/actual-value deviation (ΔAᵢ) and
- determination of the manipulated variable in accordance with the machining depth deviation (ΔBtᵢ).

## Revendications

1. Procédé de traitement de pièces à usiner au moyen du rayonnement laser émis par un laser (30), dans lequel le rayonnement provenant d'un emplacement d'usinage (40) de la pièce à usiner (41) est détecté et traité pour former des signaux et dans lequel le procédé d'usinage est réglé par au moins une grandeur de réglage obtenue sur la base de ces signaux, comprenant les étapes de procédé suivantes :
(A) Détermination d'une distance effective (A_{effective}) entre un point de référence fixe (44) et la surface (45) de l'emplacement d'usinage (40) caractérisé par les autres étapes de procédé suivantes :
(B) détermination d'un écart valeur de consigne/valeur effective (ΔAᵢ) entre une distance de consigne prédéfinie (A_{consigne}) et la distance effective détectée (A_{effective});
(C) détermination d'au moins une grandeur de réglage par l'unité de commande (10), correspondant à l'écart valeur de consigne/valeur effective (ΔAᵢ) (D) fourniture des grandeurs de réglage déterminées à au moins un organe de réglage.

2. Procédé selon la revendication 1, caractérisé en ce que
- en plus de la détermination de la distance effective (A_{effective}) et de la définition de l'écart valeur de consigne/valeur effective (ΔAᵢ), une profondeur d'usinage (Bt_{effective}), qui correspond à la distance entre la surface (45) de l'emplacement d'usinage (40) et une ligne de fond (46), est déterminée
- un écart de profondeur d'usinage (ΔBtᵢ) est déterminé à partir de la profondeur d'usinage (Bt_{effective}) et de l'écart valeur de consigne/valeur effective (ΔAᵢ),
- au moins une grandeur de réglage est déterminée selon l'écart de profondeur d'usinage (ΔBtᵢ) .

3. Procédé selon la revendication 1 ou 2, caractérisé en ce que, comme grandeur de réglage, l'intensité de rayonnement du laser (30) est réglée par des impulsions de commande à modulation d'amplitude, de largeur d'impulsions et/ou de fréquence (Pa, w, p), par une défocalisation adaptée du rayon laser (42) et/ou par un obturateur et en ce que le laser (30) délivre des impulsions laser (Lp) correspondant aux impulsions de commande modulées.

4. Procédé selon l'une des revendications 1 à 3, caractérisé en ce que, comme grandeur de réglage, la vitesse d'avance relative de la pièce (41) est réglée par des impulsions de commande (Pg) modulées en vitesse.

5. Procédé selon l'une des revendications 1 à 4, caractérisé en ce que, parallèlement à la régulation du procédé d'usinage, la vitesse d'avance relative est détectée et l'intensité de rayonnement du laser est réglée à titre supplémentaire conformément à la vitesse d'avance relative détectée.

6. Procédé selon l'une des revendications 1 à 5, caractérisé en ce que, au début d'une nouvelle couche d'enlèvement K, la distance de consigne (A_{consigne k - 1}) de la couche d'enlèvement précédente k - l est comparée à la distance effective mesurée (A_{effective k}) de la couche d'enlèvement actuelle, en ce que une différence de distance (ΔAₖ) est déterminée à partir de cette comparaison (étapes 105 - 108) et en ce que les impulsions de commande (Pa, w, p) sont corrigées conformément à la différence de distance (ΔAₖ).

7. Procédé selon l'une des revendications 1 à 6, caractérisé en ce que les signaux de mesure (Sa, Sm) sont détectés pendant la durée d'une impulsion laser (Lpᵢ) et en ce que les impulsions de commande (Pa, w, p) sont déterminées pour au moins une impulsion laser (Lpᵢ₊ₙ) suivant immédiatement cette impulsion laser (Lpᵢ).

8. Procédé selon l'une des revendications 1 à 7, caractérisé en ce que les signaux (Sa) correspondant à la distance effective (A_{effective}) et/ou les signaux (Sm) correspondant à la profondeur d'usinage (Bt_{effective}) sont détectés sur plusieurs impulsions laser (Lp) et par la suite font l'objet d'un calcul de moyenne, et en ce que, à partir des signaux ayant fait l'objet d'un calcul de moyenne, des impulsions de commande sont produites pour le groupe suivant d'impulsions laser.

9. Procédé selon l'une des revendications 1 à 8, caractérisé en ce que, au début de l'usinage, une largeur d'impulsion, une amplitude d'impulsions et un temps de pause entre deux impulsions sont prédéfinis pour la première impulsion de commande (Pa, w, p1).

10. Procédé selon l'une des revendications 1 à 9, caractérisé en ce que les impulsions de commande (Pa, w, p) de la distance de surface sont extraites sous forme de dimensions à partir d'une matrice comprenant au moins l'écart valeur de consigne/valeur effective (ΔAᵢ)' l'écart de profondeur d'usinage (ΔBtᵢ) ou la différence de distance (ΔAₖ).

11. Procédé selon l'une des revendications 1 à 10, caractérisé en ce que, pour minimiser le temps de réponse du rayonnement laser, une pré-impulsion (Pv) agit sur chaque impulsion de commande (Pa, w, p).

12. Procédé selon l'une des revendications 1 à 11, caractérisé en ce que le laser (30) est maintenu par échauffement dans un état excité sous le seuil laser quand le laser (30) est désactivé pendant une durée supérieure à une période de temps prédéfinie.

13. Procédé d'usinage de pièces à usiner au moyen du rayonnement laser émis par un laser, dans lequel la pièce à usiner (41) fait l'objet, par lignes ou par couches, d'un enlèvement de matière sous l'action du rayon laser (42), dans des couches successives très rapprochées, caractérisé en ce que, au début d'une nouvelle couche d'enlèvement K, la distance de consigne (A_{consigne k - l}) entre un point de référence fixe (44) et la surface de la couche d'enlèvement précédente k - l est comparée à une distance effective mesurée (A_{effective k}) entre un point de référence fixe (44) et la surface de la couche d'enlèvement actuelle, en ce que une différence de distance (ΔAₖ) est déterminée à partir de cette comparaison, et en ce que au moins une grandeur de réglage est corrigée conformément à la différence de distance (ΔAₖ).

14. Dispositif d'usinage de pièces à usiner au moyen du rayonnement laser émis par un laser (30), comprenant
- un système de mesure (50) pour la détection de grandeurs de procédé,
- une unité d'excitation laser (20) pour l'amorçage du laser (30)
- et une unité de commande électronique (10) pour le traitement des signaux de mesure (Sa, Sm) du système de mesure (50) et pour la commande d'un organe de réglage,
où
le système de mesure (50) présente un capteur de distance (52) et où l'unité de commande (10) est constituée de façon à effectuer l'étape suivante :
(A) détermination d'une distance effective (A_{effective}) par le biais du signal (Sa) du capteur de distance (52), la distance effective (A_{effective}) correspondant à la distance entre un point de référence fixe (44) et la surface (45) de l'emplacement d'usinage (40), caractérisé en ce que l'unité de commande (10) est en outre constituée de façon à effectuer les autres étapes suivantes :
(B) détermination d'un écart valeur de consigne/valeur effective (ΔAᵢ) entre une distance de consigne prédéfinie (A_{consigne}) et la distance effective déterminée (A_{effective}),
(C) détermination d'au moins une grandeur de réglage conformément à l'écart valeur de consigne/valeur effective (ΔAᵢ)
(D) fourniture des grandeurs de réglage à au moins un organe de réglage.

15. Dispositif selon la revendication 14, caractérisé en ce que le système de mesure (50) présente un capteur de rayonnement (52) qui détecte la profondeur d'usinage (Bt_{effective}).

16. Dispositif selon la revendication 14 ou 15, caractérisé en ce que l'unité de commande (10) est constituée de façon à effectuer les étapes suivantes :
- détection du rayonnement de procédé de l'emplacement d'usinage (40) par le biais du signal (Sm) du capteur de rayonnement (52) et détermination, à partir du signal (Sm), d'une profondeur d'usinage (Bt_{effective}) correspondant à la distance entre la surface (45) de l'emplacement d'usinage (40) et de la ligne de fond (46)
- détermination d'un écart de profondeur d'usinage (ΔBtᵢ) à partir de la profondeur d'usinage (Bt_{effective}) et de l'écart valeur de consigne/valeur effective (ΔAᵢ) et
- détermination de la grandeur de réglage conformément à l'écart de profondeur d'usinage (ΔBtᵢ).
